# EUROPEAN PATENT APPLICATION

(11) **EP 2 372 936 A1**
(43) Date of publication of application: **05.10.2011**
(21) Application number: 10305318.7
(22) Date of filing: 29.03.2010
(51) Int. Cl.: H04J 14/02

(54) **Photonic integrated transmitter**

(71) Applicant: Alcatel Lucent, 75008 Paris (FR)
(72) Inventor: Shen, Alexandre, 91767, Palaiseau (FR)
(74) Representative: Shamsaei Far, Hassan

(57) **Abstract**

A photonic integrated circuit transmitter and a method for transmitting optical signals comprising a mode-locked laser diode generating a frequency comb optical signal and inputting said comb optical signal into a multiplexer/demultiplexer which demultiplexes said comb optical signal into a plurality of individual optical signals. A plurality of reflective modulators each receiving a respective one of said demultiplexed individual optical signals and modulating said received individual optical signal and reflecting the modulated optical signal back to the multiplexer/demultiplexer. The multiplexer/demultiplexer then multiplexes the received modulated optical signal into a multiplexed output optical signal.

## Description

The present invention relates to optical devices, in particular the invention relates to a photonic integrated transmitter.

### BACKGROUND ART

Wavelength Division Multiplexing (WDM) is a technology which is being increasingly used in order to provide higher transmission capacity in optical networks. In WDM technique, a plurality of optical carrier signals are multiplexed to be transmitted on an optical fiber where different wavelengths are used for carrying different signals. Each one of such carrier signals is typically called a WDM channel.

Reducing the size of optical equipment used in WDM transmission is desired in order to reduce manufacturing cost as well as power consumption. Photonic integrated circuits (PIC) are therefore used for achieving such objectives.

### SUAMMRY

One example of such use of photonic integrated circuits is in a WDM transmitter. However, such transmitters typically use a number, N, of laser sources to serve N WDM channels.

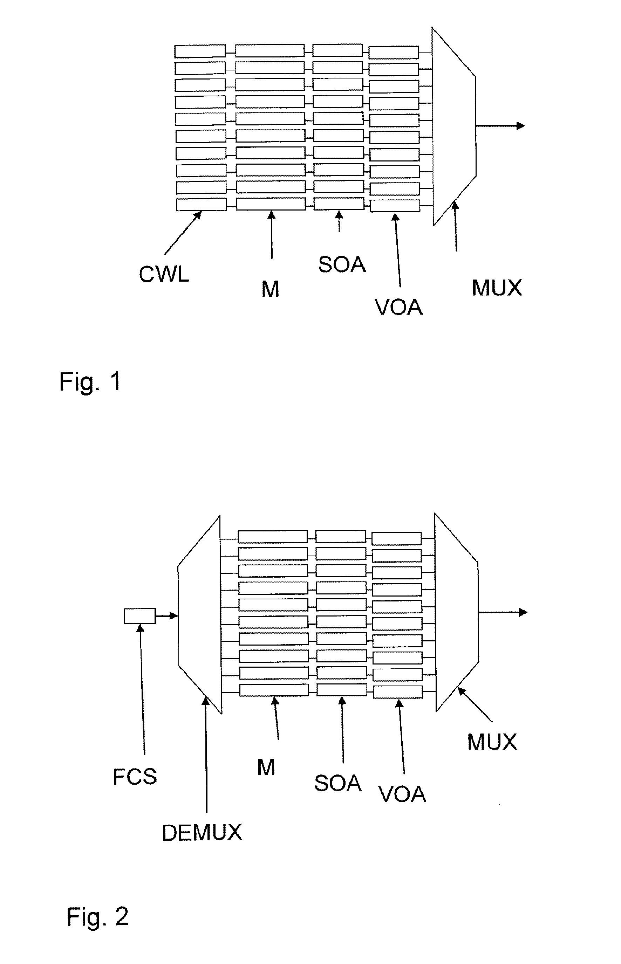

Figure 1 is a schematic representation of a known solution for PIC transmitter architecture using a plurality of laser sources, for example an array of continuous wave laser diodes, represented in the figure by the general reference CWL. The PIC transmitter further comprises an array of modulators represented in the figure by the general reference M to modulate the signal to be transmitted, an array of semiconductor optical amplifiers represented in the figure by the general reference SOA to amplify the signal to be transmitted and an array of variable optical attenuators represented in the figure by the general reference VOA to equalize the power from all the channels. The channels are then multiplexed in a multiplexer MUX for transmission.

Such a configuration, despite the use of a PIC, is still power consuming, because typically each laser is biased by one independent current, and the wavelength of the laser typically needs to be precisely controlled, for example via one individual Ohmic heater.

In order to overcome the problem of using a plurality of laser sources some known solutions are directed toward using a mode-locked laser based frequency comb source (FCS). Figure 2 is a schematic representation of an exemplary transmitter of this kind.

The transmitter of figure 2 comprises a FCS, generating a plurality of wavelengths which are multiplexed and fed into a demultiplexer (DEMUX), typically an Arrayed Waveguide Grating (AWG) in charge of demultiplexing said multiplexed wavelengths into individual channels. Each of the individual channels is then input into a respective modulator from an array of modulators represented in the figure by the general reference M to modulate the signal to be transmitted, an array of semiconductor optical amplifiers represented in the figure by the general reference SOA to amplify the signal to be transmitted and an array of variable optical attenuators represented in the figure by the general reference VOA to equalize the power from all the channels. The channels are then multiplexed in a multiplexer MUX for transmission.

The transmitter of figure 2 has the advantage of using a FCS which gives rise to savings in power consumption, because N (typically 8 or 10) lasers are replaced by one laser source (FCS). Furthermore, the alignment of the wavelength on ITU-T grid (as defined by ITU-T standards) is easier for the comb source, because a significant number of independent temperature controllers to be used for each source are replaced by only one temperature controller.

However, the architecture shown in figure 2 has a drawback in that it requires the use of a demultiplexer DEMUX to distribute the wavelengths to individual modulators and a multiplexer MUX to recombine all the coded channels at the output of transmitter. Multiplexer and demultiplexer functionalities may typically be provided by means of an arrayed waveguide grating (AWG) which is a device of considerable size. Therefore, despite the described advantages, the above known solutions may typically not reduce significantly the footprint or they may even result in a bigger footprint than what was achieved using the previous known art.

Accordingly some embodiments feature a photonic integrated circuit transmitter comprising a laser source configured for generating a frequency comb optical signal, a multiplexer/demultiplexer configured for receiving a frequency comb optical signal from the laser source and demultiplex said comb optical signal into a plurality of individual optical signals, a plurality of reflective modulators wherein at least some of said plurality of reflective modulators are each configured for receiving a respective one of said demultiplexed individual optical signals, modulating said received individual optical signal and reflecting the modulated optical signal back to the multiplexer/demultiplexer wherein said multiplexer/demultiplexer is further configured for multiplexing the received modulated optical signal into a multiplexed output optical signal.

Preferably the laser source is a mode-locked laser diode.

Preferably the transmitter further comprises a plurality of variable optical attenuators.

Preferably the transmitter further comprises a plurality of semiconductor optical amplifiers.

Some embodiments feature a method for transmitting optical signals comprising:
- generating a frequency comb optical signal by means of a laser source;
- receiving, by means of a multiplexer/demultiplexer, the frequency comb optical signal from the laser source and demultiplexing said comb optical signal into a plurality of individual optical signals;
- receiving a respective one of said demultiplexed individual optical signals by means of a respective reflective modulator, modulating said received individual optical signal and reflecting the modulated optical signal back to the multiplexer/demultiplexer
- multiplexing the received modulated optical signal into a multiplexed output optical signal by means of the multiplexer/demultiplexer.

These and further features and advantages of the present invention are described in more detail, for the purpose of illustration and not limitation, in the following description as well as in the claims with the aid of the accompanying drawings.

### BRIEF DESCRIPTION OF THE DRAWINGS

Figure 1, already described, is a schematic representation of a known solution for a PIC transmitter architecture using a plurality of laser sources.
Figure 2, already described, is a schematic representation of a known solution showing an exemplary transmitter using a mode-locked laser based frequency comb source.
Figure 3 is an exemplary schematic representation of a transmitter according to some embodiments.

### DETAILED DESCRIPTION

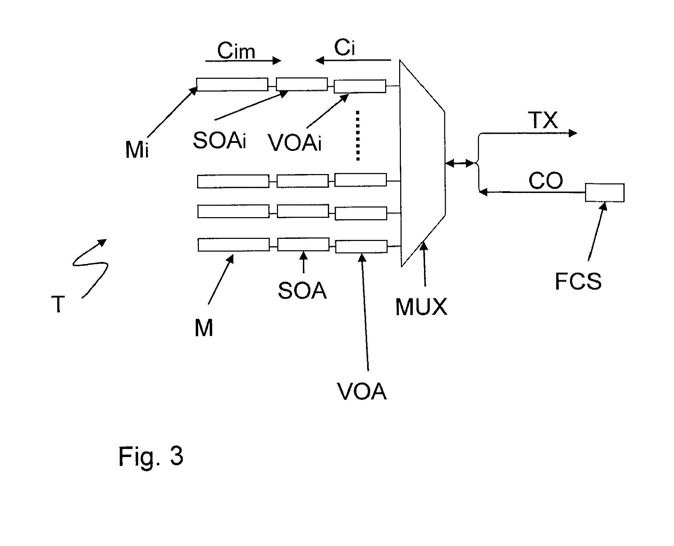

In figure 3, an exemplary schematic representation of a transmitter is shown according to some embodiments.

The transmitter T of figure 3 comprises a laser source configured for generating a frequency comb of optical signals represented in the figure by reference FCS. in particular, the frequency comb comprises a plurality of wavelengths which are multiplexed as represented in the figure by the reference CO.

In this non-limiting example, the laser source is assumed to be a mode-locked laser diode with the capability of generating said frequency comb of optical signals.

The multiplexed comb optical signal CO is input into a multiplexer/demultiplexer MUX, preferably an arrayed waveguide grating (AWG), which is configured for demultiplexing said multiplexed wavelengths into a plurality of individual channels. An individual channel Cᵢ is then input into a respective reflective modulator Mᵢ comprised in an array of modulators represented in the figure by the general reference M. The reflective modulator Mᵢ modulates the received individual optical channel Cᵢ and reflects the modulated channel Cᵢₘ back towards the multiplexer/demultiplexer MUX for transmission.

A modulated channel Cᵢₘ reflected back from the modulator Mᵢ is preferably input into a respective semiconductor optical amplifier SOAᵢ from among an array of semiconductor optical amplifiers represented in the figure by the general reference SOA. The semiconductor optical amplifier SOAᵢ is configured to amplify the modulated channel Cᵢₘ .The amplified modulated channel Cᵢₘ output from the semiconductor optical amplifier is preferably input into a respective variable optical attenuator VOAᵢ from among an array of variable optical attenuators represented in the figure by the general reference VOA. The variable optical attenuator VOAᵢ is configured to equalize the power in the respective modulated channel Cᵢₘ with respect to all the channels to be transmitted. The modulated channel Cᵢₘ are then multiplexed in the multiplexer/demultiplexer MUX to generate one WDM modulated (coded) signal for transmission on transmission line TX.

In the reflective mode operation as described herein, the AWG has both functionalities of DeMux and Mux. Therefore, the VOAs and the SOAs have also a double functionalities. This means that for the CW signal coming from the FCS, the VOAs and the SOAs have the functionalities of power pre-equalization and pre-amplification respectively; and for the coded signal which is reflected back from the reflective modulator, the SOAs have the power amplifier functionality and the VOAs have the final power equalization functionality. As the signal passes through the VOA and SOA devices twice (because of reflection), then the SOA gain and the attenuation for equalization that are required are typically less than the values typically needed in the transmission mode thus resulting in even less power consumption. This is still a further advantage of the reflective mode used in the solution described herein.

The reflective modulators M may be electro-absorption modulators (EAMs). EAMs are used to provide typical OOK (on-off keying) modulation formats such as RZ or NRZ. Alternatively, in order to provide more advanced phase shift keying (x-PSK) formats InP-integrated Mach-Zehnder modulators may be used. Reflective mode operation is possible both for EAM, and for MZ modulators which provides the advantage of shorter devices, since light travels twice in them: namely forward and backward.

The reflective modulators may also be reflective-mode semiconductor optical amplifiers (R-SOA)

Preferably the transmitter further comprises an integrated optical isolator in order to suppress parasitic optical feedback into the FCS.

The modulation rate of the modulated channel Cᵢₘ may be for example at about 10Gbps.

In this manner a transmitter may be produced with a reduced footprint and reduced power consumption (as compared to conventional transmitters), mainly due to the use of only one frequency comb source instead of an array of laser sources thus leading to power saving, both through a reduction in the number of individual laser sources, as well as the reduced amount of heat to be dissipated. Footprint saving is also achieved in the overall size due to the use of a single multiplexer/demultiplexer component configured to perform both functions of demultiplexing the input comb signal and then multiplexing the coded (modulated) channels for transmission. In fact the reflectivity provided by the reflective modulators Mᵢ (or in general M) gives the possibility of using one single multiplexer/demultiplexer component.

Furthermore, as only one temperature controller is needed for the single frequency comb generator, the need for independently controlling the temperature of each laser source (which is the case in some conventional transmitters) is eliminated.

It is to be noted that the list of structures corresponding to the claimed means is not exhaustive and that one skilled in the art understands that equivalent structures can be substituted for the recited structure without departing from the scope of the invention. For example the reflective-mode electro-absorption modulator (R-EAM) may be replaced by a reflective-mode semiconductor optical amplifier (R-SOA) or a reflective Mach-Zehnder interferometer as described previously.

Furthermore, the reflective modulators and the SOAs as described in relation to figure 3, may be replaced by a barrette of directly modulated injection-locked lasers in a reflective mode, which are wavelength seeded or injected and thus controlled by the comb of optical signals CO coming from the FCS, leading to further power saving. This is due to the fact that as the modulation takes place directly in the injection locked lasers, there is no need for extra-cavity modulators and no need for SOA to amplify the power.

It is also to be noted that the order of the steps of the method of the invention as described and recited in the corresponding claims is not limited to the order as presented and described and may vary without departing from the scope of the invention.

It should be appreciated by those skilled in the art that any block diagrams herein represent conceptual views of illustrative circuitry embodying the principles of the invention.

## Claims

1. A photonic integrated circuit transmitter comprising a laser source configured for generating a frequency comb optical signal, a multiplexer/demultiplexer configured for receiving a frequency comb optical signal from the laser source and demultiplex said comb optical signal into a plurality of individual optical signals, a plurality of reflective modulators wherein at least some of said plurality of reflective modulators are each configured for receiving a respective one of said demultiplexed individual optical signals, modulating said received individual optical signal and reflecting the modulated optical signal back to the multiplexer/demultiplexer wherein said multiplexer/demultiplexer is further configured for multiplexing the received modulated optical signal into a multiplexed output optical signal.

2. The transmitter of claim 1, wherein the laser source is a mode-locked laser diode.

3. The transmitter of any one of the previous claims comprising a plurality of variable optical attenuators.

4. The transmitter of any one of the previous claims further comprising a plurality of semiconductor optical amplifiers.

5. The transmitter of any one of the previous claims wherein the multiplexer/demultiplexer is an arrayed waveguide grating.

6. The transmitter of any one of the previous claims wherein the reflective modulator is a reflective-mode electro-absorption modulator or a reflective-mode semiconductor optical amplifier or a Mach-Zehnder interferometer.

7. A method for transmitting optical signals comprising:
• generating a frequency comb optical signal by means of a laser source;
• receiving, by means of a multiplexer/demultiplexer, the frequency comb optical signal from the laser source and demultiplexing said comb optical signal into a plurality of individual optical signals;
• receiving a respective one of said demultiplexed individual optical signals by means of a respective reflective modulator, modulating said received individual optical signal and reflecting the modulated optical signal back to the multiplexer/demultiplexer
• multiplexing the received modulated optical signal into a multiplexed output optical signal by means of the multiplexer/demultiplexer.

8. The method of claim 7 further comprising generating a frequency comb optical signal by means of a mode-locked laser diode.

9. The method of claim 7 or claim 8 further comprising amplifying the modulated optical signal by means of a semiconductor optical amplifier.

10. The method of any one of the claims 7 to 9 comprising an equalizing process on the modulated optical signal by means of a variable optical attenuator.
